# EUROPÄISCHE PATENTANMELDUNG

(11) **EP 1 447 664 A2**
(43) Veröffentlichungstag der Anmeldung: **18.08.2004**
(21) Anmeldenummer: 04010437.4
(22) Anmeldetag: 04.12.1999
(51) Int. Cl.: G01N 33/00

(54) **Gasanalysegerät und Verfahren**

(30) Priorität: 08.12.1998 DE 19856414
(62) Teilanmeldung aus: 99959379.1
(71) Anmelder: Forschungszentrum Karlsruhe GmbH, 76133 Karlsruhe (DE)
(72) Erfinder: Keller, Hubert Dr., 76139 Karlsruhe (DE); Seifert, Rolf, 79365 Rheinhausen (DE); Jerger, Armin, 77815 Bühl (DE); Becker, Frank, 76227 Karlsruhe (DE); Kohler, Heinz Prof. Dr., 77815 Bühl (DE)

(57) **Zusammenfassung**

Es wird ein Verfahren zum Auswerten der von einem Gasanalysegerät zur qualitativen und/oder quantitativen Bestimmung einer Konzentration von zumindest einer Gaskomponente mittels mindestens eines nach einem zyklisch vorgegebenen Heizprofil beheizten Gassensors erhaltenen Messwerte beschrieben. Mit dem Verfahren werden Leitwert-Zeit-Profile erstellt. Dabei wird für jede Gaskomponente die Gaskonzentration als Funktion des Integrals des Kalibrierprofils und der unterschiedlichen Zustände des Kalibriermediums dargestellt. Für jede Gaskomponente wird an jedem Messpunkt die Leitwertänderung als Funktion des Integralwerts und den unterschiedlichen Zuständen des Kalibriermediums dargestellt. Zur Identifizierung der Gaskomponente in einer zu analysierenden Probe wird das Leitwertprofil gemessen und der Probenintegralwert bestimmt. Mit den Daten wird das synthetische Probenprofil errechnet und mit dem tatsächlichen Probenprofil verglichen. Mit Hilfe einer Metrik werden schließlich Hypothesentests durchgeführt.

## Beschreibung

Die Erfindung betrifft ein Verfahren zum Auswerten der mit einem Gasanalysegerät gewonnen Messwerte.

In einer Reihe von preiswerten Gasanalysegeräten werden Halbleiter-Gassensoren eingesetzt: als Warnmelder z. B. vor Undichtigkeiten in Gasanlagen, vor Rauchentwicklungen im Brandfall, als Leckagedetektoren zur Überwachung von Kühlanlagen oder als Alarmgeber vor einer Vielzahl von toxischen Gasen z.B. zur MAK-Überwachung (MAK: Maximale Arbeitsplatzkonzentration).

Hinsichtlich der Materialbeschaffenheit werden hierzu vorzugsweise Halbleiter-Gassensoren vom SnO₂-Typ verwendet, da diese nach dem Stand der Technik eine hohe Empfindlichkeit, einen niedrigen Stückpreis und eine sehr einfache, preiswerte Messtechnik aufweisen.

Um verschiedene Gase selektiv nachweisen bzw. um Gaskomponenten in einem Gemisch analysieren zu können, ist bereits vorgeschlagen worden, mehrere der vorbeschriebenen einzelnen Halbleiter-Gassensorelemente zu einer Einheit, einem sogenannten Multisensor-Array zusammenzufassen und entweder jedes dieser Einzeldetektorelemente mit einer selektiv permeablen Membran zu umhüllen oder bei verschiedenen konstanten Temperaturen und/oder mit unterschiedlichen Katalysatorzusätzen zu betreiben. Dadurch ist jedes Einzeldetektorelement für verschiedene Gase unterschiedlich sensitiv, und der Multisensor kann - entsprechend seiner verschiedenen Einzeldetektorelement-Bausteine - ggf. unter Anwendung von numerischen Mustererkennungsmethoden, zum selektiven Nachweis verschiedener Komponenten eines Gases eingesetzt werden.

In der EP 0 829 718 A1 wird ein Gasanalysegerät beschrieben, mit dem eine Gaskomponente über einen oder mehrere, spezifisch empfindliche Halbleiter-Gassensor/en angezeigt und in ihrer Konzentration bestimmt wird. Hierzu wird die Arbeitstemperatur des Sensors bzw. der Sensoren zyklisch variiert und dessen bzw. deren Widerstand oder Leitwert über die Zykluszeit in Form von Leitwert-Zeit-Profilen aufgenommen, woraus dann schließlich Prozesssignale abgeleitet werden. Solche Profile sind für die spezifischen Stoffe wie Benzol, Toluol und Ethanol beispielhaft aufgenommen und in den Figuren 2(1) bis 2(5) der Zeichnung dargestellt. Dabei ist zu berücksichtigen, dass die angestrebte Analysequalität nach dem Verfahren in EP 0 829 718 A1 nur erreicht werden kann, wenn die Zusammensetzung des Gasgemisches während der Aufnahme des Leitwert-Zeit-Profils konstant ist, denn nur unter dieser Voraussetzung können gasspezifische Profilformen gewonnen werden, die anschließend zur Identifikation der Gaskomponente herangezogen werden können.

Dies bedeutet, dass die Messgasatmosphäre vor dem Sensorelement nur in einem definierten Zeitintervall zwischen zwei aufeinanderfolgenden Messzyklen ausgetauscht werden kann, um auf diese Art und Weise die aktuelle Zusammensetzung des Messgases im Zeitabstand von ungefähr eines Heizzyklus zu erfassen.

Einerseits soll dabei die Bestimmungszeit reduziert werden, um Regelfreiheit zu bekommen, und andrerseits soll es eine Vielfachmesskammeranordnung sein, um durch unterschiedliche Gassensoren eine verbesserte Selektivität zu erreichen.

Die Auswertung der Sensorsignale erfolgt über ein Klassifikationsverfahren, welches bei unterschiedlichen Zuständen des zu analysierenden Gasgemisches eine qualitative und quantitative Bestimmung der zu detektierenden Gaskomponenten ermöglicht. Es ist im Gegensatz zu dem in der EP 0 829 718 A1 beschriebenen Auswerteverfahren auch ein ausschließendes Klassifikationsverfahren, das feststellt, ob sich andere als die zu detektierenden Gaskomponenten im Messmedium befinden.

Der Erfindung liegt die Aufgabe zugrunde, in der Atmosphäre oder einem sonstigen gasförmigen Medium gasförmige Komponenten zu detektieren und in ihrer Konzentration zuverlässiger und exakter zu bestimmen.

Die Aufgabe wird durch die im Anspruch 1 aufgeführten Verfahrensschritte i. bis vi. gelöst. Mit dem Verfahren werden mit hoher Zuverlässigkeit die Messwerte von den aktivierten Sensoren verarbeitet und mit großer Exaktheit die jeweilige Gasart und ihre Konzentration bestimmt.

Anspruch 2 beschreibt einen Verfahrensschritt, die Messzeit zu verkürzen, entsprechend Anspruch 3 den, die Selektivität zu erhöhen.

Der Verfahrensschritt der Gruppenbildung aus den aktivierbaren Kammern ist in Anspruch 4 niedergeschrieben, wobei die Sensoren einer Gruppe alle gleich sind. Das erlaubt, verschiedene Gaskomponenten in einer Atmosphäre zu bestimmen.

Mit dem Verfahren steht eine Auswertung der mit einem Gasanalysegerät gewonnenen Messwerte zur Verfügung, das in erster Linie bei der Analyse und Überwachung von Gasgemischen zum Einsatz kommen soll, sei es zur Überwachung der Gefahr von toxischen Schäden oder der Explosionsgefahr oder zur Steuerung und Regelung empfindlicher Verfahrensprozesse. Das Verfahren bietet hohe Zuverlässigkeit und weist eine geringere Neigung zu Fehlalarmen durch harmlose Stoffe auf.

Das Auswerteverfahren ist ein Klassifikationsverfahren, das entscheidet, ob sich eine der zu detektierenden Gaskomponenten im Messmedium befindet oder nicht, und das gegebenenfalls die Gaskonzentration bestimmt. Es ist ein ausschließendes Klassifikationsverfahren, das feststellt, ob sich andere als die zu detektierenden Gaskomponenten im Messmedium befinden.

Das Auswerteverfahren ist in der Lage, diese Klassifikation und Konzentrationsbestimmung auch bei unterschiedlichen Zuständen des Messmediums durchzuführen, wie z.B. verschiedene relative bzw. absolute Luftfeuchtigkeiten, Luftdrucke, Lufttemperaturen.

Die Funktionsweise des Auswerteverfahren wird im folgenden näher erläutert:
I. Zu jeder in Betracht kommenden Gaskomponente werden Kalibrierprofile in Form von Leitwert-Zeit-Profilen für verschiedene Gaskonzentrationen bei unterschiedlichen Zuständen des Kalibriermediums (z.B. verschiedene relative Luftfeuchtigkeiten u.ä.) erstellt.
II. Für jede Gaskomponente wird die Gaskonzentration als Funktion des Integrals (Fläche) des Kalibrierprofils (im folgenden kurz Integralwert genannt) und der unterschiedlichen Zustände des Kalibriermediums dargestellt.
III. Ferner wird für jede Gaskomponente an jedem Messpunkt die Leitwertänderung als Funktion des Integralwerts und den unterschiedlichen Zuständen des Kalibriermediums dargestellt.
IV. Zur Identifizierung der Gaskomponente in einer zu analysierenden Probe (Messmedium) wird zunächst das Leitwertprofil dieser Probe - im folgenden Probenprofil genannt - gemessen und der Probenintegralwert bestimmt. Ferner werden die unterschiedlichen Zustände des Messmediums gemessen. Mit diesen Daten wird mit dem aus (3) ermittelten funktionalen Zusammenhang für jede Gaskomponente das "synthetische" Probenprofil errechnet. Dieses wird mit dem tatsächlichen Probenprofil verglichen. Mit Hilfe einer Metrik werden Hypothesentests durchgeführt, ob eine der Gaskomponenten (und wenn ja, welche) sich in der Probe befindet. In diesem Falle wird mit Hilfe des in II. ermittelten funktionalen Zusammenhangs die Gaskonzentration ermittelt. Das Auswerteverfahren ist in dem Sinne auch ein ausschließendes Klassifikationsverfahren, da es erkennt, ob andere als zu untersuchenden Gasgemische sich in der Probe befinden.

## Patentansprüche

1. Verfahren zum Auswerten der von einem Gasanalysegerät zur qualitativen und/oder quantitativen Bestimmung einer Konzentration von zumindest einer Gaskomponente mittels mindestens eines nach einem zyklisch vorgegebenen Heizprofil beheizten Gassensors erhaltenen Messwerte,
bestehend aus folgenden Schritten:
- i.: zu jeder in Betracht kommenden Gaskomponente werden Kalibrierprofile in Form von Leitwert-Zeit-Profilen für verschiedene Gaskonzentrationen bei unterschiedlichen Zuständen des Kalibriermediums, *wie verschiedene relative oder absoluten Luftfeuchtigkeiten, Luftdrucke, Lufttemperaturen,* erstellt;
- ii.: für jede Gaskomponente wird die Gaskonzentration als Funktion des Integrals des Kalibrierprofils und der unterschiedlichen Zustände des Kalibriermediums dargestellt;
- iii.: für jede Gaskomponente wird an jedem Messpunkt die Leitwertänderung als Funktion des Integralwerts und den unterschiedlichen Zuständen des Kalibriermediums, *wie Wert der gemessenen Luftfeuchtigkeit, des Luftdrucks, der Lufttemperatur, dargestellt,*
*wobei diese Funktion zu Berechnung des synthetischen Probenprofils in Schritt v. verwendet wird;*
- iv.: zur Identifizierung der Gaskomponente in einer zu analysierenden Probe, dem Messmedium, wird zunächst das Leitwertprofil dieser Probe, das Probenprofil, gemessen und der Probenintegralwert bestimmt sowie die unterschiedlichen Zustände des *Messmediums, wie Luftfeuchtigkeit, Luftdruck, Lufttemperatur* wie in iv. gemessen;
- v.: mit diesen Daten *aus iv., Probenintegralwert und die gemessenen unterschiedlichen Zustände des Messmediums,* wird das synthetische Probenprofil, *d.h. die einzelnen Leitwertänderungen, mit Hilfe der in iii. ermittelten Funktion* errechnet und mit dem tatsächlichen Probenprofil der *zu analysierenden Gas*probe verglichen;
- vi.: mit Hilfe einer Metrik, *d.h. dem Wert der aufsummierten* *quadratischen Differenz aus gemessenen und synthetischen Leitwertänderungen,* werden Hypothesentests durchgeführt,
ob sich eine der Gaskomponenten in der Probe befindet, bei Vorhandensein wird mit Hilfe des Integrals des Probenprofils und der unterschiedlichen Zustände des Messmediums mittels *der in Schritt 2 ermittelten Funktion* die Gaskonzentration ermittelt.

2. Verfahren nach Anspruch 1,
**dadurch gekennzeichnet,**
**dass** zur Verkürzung der Messzeit mindestens zwei Kammern mit jeweils dem gleichen spezifisch empfindlichen Sensor bestückt werden.

3. Verfahren nach Anspruch 1,
**dadurch gekennzeichnet,**
**dass** in dem Messkopf zur Steigerung der Selektivität mindestens zwei Kammern mit jeweils einem spezifisch anders empfindlichen Sensor bestückt werden, untergebracht sind, in die jeweils ein spezifisch anders empfindlicher Sensor ragt.

4. Verfahren nach Anspruch 1,
**dadurch gekennzeichnet,**
**dass** in dem Messkopf zur Verkürzung der Messzeit mindestens zwei aufeinanderfolgende Kammern mit jeweils dem selben Sensor bestückt wird und zur Steigerung der Selektivität mindestens zwei Gruppen solcher Kammern mit jeweils spezifisch anders empfindlichen Sensoren bestückt werden.
